# EUROPÄISCHE PATENTSCHRIFT

(11) **EP 1 924 948 B1**
(45) Veröffentlichungstag und Bekanntmachung des Hinweises auf die Patenterteilung: **24.03.2010**
(21) Anmeldenummer: 06792872.1
(22) Anmeldetag: 17.08.2006
(51) Int. Cl.: G06K 7/08, G07F 7/10, G07F 7/08, G07F 19/00

(54) **VERFAHREN ZUM ERZEUGEN EINES ELEKTROMAGNETISCHEN SCHUTZFELDES FÜR EIN KARTENLESEGERÄT**
METHOD FOR PRODUCING AN ELECTROMAGNETIC PROTECTION FIELD FOR A CARD-READING DEVICE
PROCEDE POUR PRODUIRE UN CHAMP DE PROTECTION ELECTROMAGNETIQUE POUR UN LECTEUR DE CARTES

(30) Priorität: 12.09.2005 DE 102005043317
(43) Veröffentlichungstag der Anmeldung: 28.05.2008
(73) Patentinhaber: Wincor Nixdorf International GmbH, 33106 Paderborn (DE)
(72) Erfinder: SCHLIEBE, Dieter, 33181 Bad Wünnenberg (DE); NOLTE, Michael, 33034 Brakel (DE); NICKEL, Thomas, 33100 Paderborn (DE)
(86) Internationale Anmeldenummer: PCT/EP2006/065395
(87) Internationale Veröffentlichungsnummer: WO 2007/048649

(56) Entgegenhaltungen:
- EP-A- 1 394 728
- EP-A2- 1 067 474
- GB-A- 2 351 586
- US-B1- 6 390 367
- SVIGALS J: "Unauthorized Card Stripe Reading Inhibitor" IBM TECHNICAL DISCLOSURE BULLETIN, IBM CORP. NEW YORK, US, Bd. 26, Nr. 6, 1. November 1983 (1983-11-01), Seite 2707, XP002145300 ISSN: 0018-8689

## Beschreibung

### Technisches Gebiet

Die vorliegende Erfindung betrifft ein Verfahren für ein Selbstbedienungs-Terminal wie einen Geldautomaten, einen Kontoauszugsdrucker und/oder ein Informationsterminal mit einem Kartenlesegerät für eine Magnetstreifenkarte zur Verhinderung des Auslesens von Daten auf der Magnetstreifenkarte mit Hilfe einer in der Nähe des Kartenlesegerätes installierten Ausspähvorrichtung.

### Stand der Technik

Dabei kann das SB-Terminal beispielsweise durch einen Kontoauszugsdrucker oder einen Geldautomat gebildet werden. Die zu lesende Karte kann in diesem Fall eine Bankkarte mit einem Magnetstreifen sein, in dem Kunden- und Kontodaten gespeichert sind. Die Ausspähvorrichtung kann durch einen kleinen, möglichst unauffälligen fremden Kartenleser gebildet sein, der von Dritten in betrügerischer Absicht unmittelbar vor dem Einführungsschlitz für den echten Kartenleser des SB-Terminals installiert wird. Wenn ein Kunde seine Bankkarte in den Kartenleser des SB-Terminals einführt, wird deren Magnetspur auch von diesem fremden Kartenleser gelesen, wodurch Dritte in Kenntnis der Kunden- und Kontoinformationen gelangen.

Durch Ausspähung dieser Informationen wird der Dritte in die Lage versetzt, eine Kopie der Bankkarte herzustellen. Wenn es dem Dritten darüber hinaus gelingt, die zur Bankkarte gehörige Geheimzahl (die sogenannte PIN) auszuspähen, kann er mit der gefälschten Bankkarte und der ausgespähten PIN an Geldautomaten Geld vom zugehörigen Konto abheben.

Das beschriebene betrügerischer Vorgehen, durch Ausspähen von Kundeninformationen Zugang zu fremden Kundenkonten zu erhalten, wird in Fachkreisen als "Skimming" oder Kartenmissbrauch bezeichnet. Die zum Skimming verwendeten Ausspähvorrichtungen sind in letzter Zeit immer raffinierter geworden, sowohl hinsichtlich ihrer zunehmend geringeren Größe als auch ihrer optischen Tarnung, so dass es sehr schwierig ist, die Ausspähvorrichtungen zu erkennen.

Eine Möglichkeit, das Ausspähen von Daten auf einer von dem Datenlesegerät zu lesenden Karte zu verhindern, besteht in der Erzeugung eines elektromagnetischen Schutzfeldes, welches geeignet ist, die Funktion eines Magnetkartenlesekopfes der Ausspähvorrichtung zu beeinträchtigen. Dieses Schutzfeld muss genau dort lokalisiert geringeren Größe als auch ihrer optischen Tarnung, so dass es sehr schwierig ist, die Ausspähvorrichtungen zu erkennen.

Eine Möglichkeit, das Ausspähen von Daten auf einer von dem Datenlesegerät zu lesenden Karte zu verhindern, besteht in der Erzeugung eines elektromagnetischen Schutzfeldes, welches geeignet ist, die Funktion eines Magnetkartenlesekopfes der Ausspähvorrichtung zu beeinträchtigen. Dieses Schutzfeld muss genau dort lokalisiert sein, wo Ausspähvorrichtungen installiert werden können, d.h. unmittelbar vor dem Einführungsschlitz des "echten" Kartenlesegerätes. Zudem muss das Schutzfeld ausreichend stark sein, um sicherzustellen, dass die Funktion der Ausspähvorrichtung wirksam beeinträchtigt wird, so dass die Daten nicht von der Karte gelesen werden können. Der Einsatz eines derartigen Schutzfeldes, das am Kartenschlitz des "echten" Kartenlesegerätes ein Störfeld erzeugt, um die Funktion eines illegal angebrachten Lesers zu stören, ist aus der EP 1 067 474 A1 bekannt.

Es ist jedoch nicht einfach, ein derartiges Schutzfeld so zu lokalisieren, dass es nicht versehentlich die Lesefunktion des Kartenlesegerätes des SB-Terminals beeinträchtigt. Beispielsweise befindet sich in vielen Kartenlesegeräten ein sogenannter Magnetspurvorerkennungskopf unmittelbar hinter dem Einführschlitz, mit dessen Hilfe festgestellt werden soll, ob die Karte richtig herum eingeführt wurde, d.h. ob sich der Magnetstreifen an der richtigen Stelle befindet. Solch ein Magnetspurvorerkennungskopf befindet sich relativ dicht an dem Bereich, in dem das Schutzfeld erzeugt werden muss, und es kann daher leicht passieren, dass der Magnetspurvorerkennungskopf beim Lesen durch das Schutzfeld beeinträchtigt wird. Diese Beeinträchtigung kann beispielsweise dazu führen, dass eine richtig herum eingeführte Magnetkarte abgeblockt wird, oder dass eine verkehrt herum eingeführte Magnetkarte eingezogen wird. Darüber hinaus können aber auch weiter im Inneren des Kartenlesegerätes angeordnete Leseköpfe vom Schutzfeld versehentlich beeinträchtigt bzw. gestört werden.

### Darstellung der Erfindung

In der Praxis stellt es sich als schwierig heraus, eine gute Balance zwischen einer ausreichenden Stärke und Lokalisierung des Schutzfeldes einerseits und einem sicheren ungestörten Betrieb des Kartenlesegerätes andererseits herzustellen. desselben bestehen. Die Aufgabe wird ferner durch ein Verfahren nach Anspruch 14 gelöst.

Anstatt also das Schutzfeld in seiner Stärke und Lokalisierung so einzustellen, dass eine Beeinträchtigung des Kartenlesegerätes vermieden wird, wird gemäß der vorliegenden Erfindung das Schutzfeld zu dem Zeitpunkt, zu dem es das Kartenlesegerät beeinträchtigen kann, d.h. während des Lesens durch die Lesevorrichtung des Kartengerätes, geändert, d.h. insbesondere abgeschwächt oder ausgeschaltet. Dadurch wird eine Beeinträchtigung des Kartenlesegerätes durch das Schutzfeld vollständig ausgeschlossen.

Ein weiterer wichtiger Aspekt der erfindungsgemäßen Lösung besteht darin, dass die Schutzvorrichtung von der Steuereinheit des Kartenlesegerätes, welche für die Steuerung der Karten-Transportvorrichtung und/oder die Lesevorrichtung des Kartenlesegerätes vorgesehen ist, angesteuert wird. Dies stellt eine sehr einfache und zuverlässige Art dar, das Verändern bzw. Abschalten des Schutzfeldes mit dem Lesen der Karte im Kartenlesegerät zu synchronisieren, wie unten anhand eines Ausführungsbeispieles näher erläutert wird.

Für die Funktionsweise der Erfindung ist es wichtig, dass das Schutzfeld zumindest zu Beginn des Lesens einer Karte geändert bzw. abgeschaltet wird, während des Lesens im geänderten bzw. abgeschalteten Zustand bleibt und erst nach Beendigung des Lesens wiederhergestellt wird. Natürlich kann das Schutzfeld auch schon etwas vor dem Beginn des Lesens durch das Kartenlesegerät geändert bzw. abgeschaltet werden, vorzugsweise jedoch frühestens dann, wenn sich ein Teil der Magnetspur der zu lesenden Karte bereits im Kartenlesegerät befindet. Dadurch wird sichergestellt, dass mit einer Ausspähvorrichtung nach Wegfall der Schutzwirkung des Schutzfeldes allenfalls ein Teil der Magnetspur ausgelesen werden kann, mit dem im allgemeinen nichts anzufangen ist.

Ebenso muss das Schutzfeld nicht notwendigerweise sofort nach Beendigung des Lesens durch das Kartenlesegerät wiederhergestellt werden, jedoch vorzugsweise bevor die Magnetspur der Karte das Kartenlesegerät vollständig verlassen hat.

Vorzugsweise umfasst die Schutzvorrichtung eine Induktivität zum Erzeugen des Schutzfeldes. In einer besonders vorteilhaften Weiterbildung besteht ein Mundstück oder eine Abdeckung des Kartenlesegerätes aus Kunststoff und die Induktivität ist in diese Mundstück bzw. die Abdeckung integriert.

Das Schutzfeld ist vorzugsweise ein elektromagnetisches Wechselfeld mit einer Frequenz von 20 bis 50 kHz, vorzugsweise von 40 bis 50 kHz.

In einer vorteilhaften Weiterbildung umfasst die Einrichtung ferner eine Sensorik, die geeignet ist, das Vorhandensein einer Ausspähvorrichtung festzustellen. Dabei - umfasst die Sensorik vorteilhafterweise eine Vorrichtung zur Metalldetektion mit vorzugsweise mindestens einer erster Induktivität zum Erzeugen eines primären elektromagnetischen Feldes und mindestens einer zweiter Induktivität, die geeignet ist, ein sekundäres elektromagnetisches Feld zu detektieren, welches durch die Wechselwirkung des primären elektromagnetischen Feldes mit metallischen Komponenten der Ausspähvorrichtung beeinflusst wird.

Mit dieser Sensorik kann die Einrichtung nicht nur die Funktion von Ausspähvorrichtungen unterbinden, sondern die Ausspähvorrichtungen auch aufspüren und das SB-Terminal ggf. außer Betrieb nehmen. Dadurch wird ein doppelter Schutz vor einer betrügerischen Ausspähung erzielt.

### Kurze Beschreibung der Zeichnungen

Weitere Vorteile und Merkmale der vorliegenden Erfindung ergeben sich aus der folgenden Beschreibung, in der die Erfindung anhand eines Ausführungsbeispieles unter Bezugnahme auf die Figur beschrieben wird. Dabei zeigt

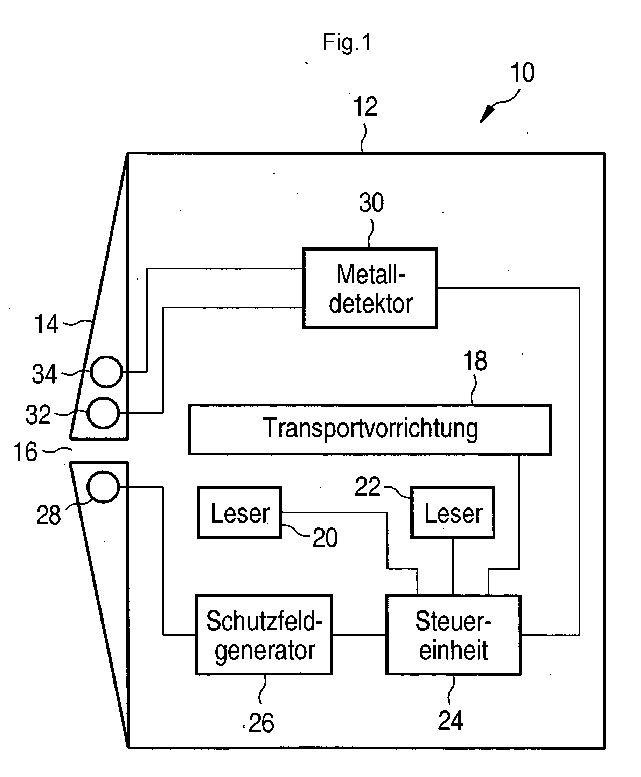

Fig.1 ein Kartenlesegerät für ein SB-Terminal mit einer Einrichtung zum Verhindern des Auslesens von Daten von einer einzuführenden Karte mittels einer in der Nähe des Kartenlesegerätes installierten Ausspähvorrichtung.

Fig.1 zeigt einen schematischen vereinfachten Aufbau eines Kartenlesegerätes 10, das für ein Selbstbedienungs-Terminal, im gezeigten Ausführungsbeispiel für einen Kontoauszugsdrucker oder einen Geldautomaten zu verwenden ist. Das Kartenlesegerät hat ein Gehäuse 12 mit einer vorderseitigen Abdeckung 14 vorzugsweise aus Kunststoff. In der Abdeckung 14 ist ein Einführungsschlitz 16 ausgebildet, durch den eine Bankkarte (nicht gezeigt) in das Kartenlesegerät 10 eingeführt werden kann.

Unmittelbar hinter dem Einführungsschlitz 16 schließt sich eine Transportvorrichtung 18 an. Die Transportvorrichtung 18 umfasst im allgemeinen Rollen zum Transport der Bankkarte sowie deren Antriebsmotoren und mehrere Sensoren zum Feststellen der Position der Bankkarte in der Transportvorrichtung 18. Diese Details sind in der vereinfachten Darstellung von Fig.1 jedoch nicht gezeigt. Ferner wird in dieser Beschreibung zu der Transportvorrichtung 18 eine Klappe (nicht gezeigt) gezählt, die nach dem Einführen der Bankkarte durch einen Klappenantrieb (nicht gezeigt) geschlossen wird.

Entlang des Transportweges der Karte innerhalb der Transportvorrichtung 18 ist eine Lesevorrichtung zum Lesen des Magnetstreifens der Bankkarte angeordnet, von der in der Fig. 1 ein erster Magnetlesekopf 20 und ein zweiter Magnetlesekopf 22 gezeigt sind. Die Transportvorrichtung 18 und die Leseköpfe 20 und 22 sind über Signalleitungen mit einer Steuereinheit 24 verbunden, die wiederum über eine Schnittstelle mit einem PC des Selbstbedienungsterminals verbunden ist.

In das Kartenlesegerät 10 von Fig. 1 ist ferner eine Einrichtung zum Verhindern des Auslesens von Daten von einer Bankkarte mittels einer von Dritten unmittelbar vor den Einführungsschlitz 16 angeordneten Ausspähvorrichtung (nicht gezeigt) integriert. Die Einrichtung umfasst einen Schutzfeldgenerator 26, der einen Signaleingang für Signale aus der Steuereinheit 24 hat und an dem eine Schutzfeldinduktivität 28 angeschlossen ist. Ferner umfasst die Einrichtung vorteilhafterweise einen Metalldetektor 30, der ebenfalls einen Signaleingang für Signale aus der Steuereinheit 24 hat, und an dem eine erste Induktivität 32 und eine zweite Induktivität 34 angeschlossen sind. Die Schutzfeldinduktivität 28, die erste Induktivität 32 und die zweite Induktivität 34 sind in die Kunststoffabdeckung 14 des Kartenlesegerätes 10 eingegossen und somit in diese integriert und vorzugsweise als Spulen ausgebildet.

### Bester Weg zur Ausführung der Erfindung

Solange keine Karte in das Kartenlesegerät 10 eingeführt wird, erzeugt der Schutzfeldgenerator 26 über die Schutzfeldinduktivität 28 ein elektromagnetisches Schutzfeld, das im Bereich vor dem Einführungsschlitz 16 lokalisiert ist. Das Schutzfeld ist so eingestellt, dass es die Funktion eines fremden Magnetspurlesers, der in betrügerischer Absicht vor dem Einführungsschlitz 16 installiert wurde, so beeinträchtigt, dass mit diesem keine verwertbaren Daten aus dem Magnetstreifen ausgelesen werden können.

Außerdem erzeugt der Metalldetektor 30 über die erste Induktivität 32 ein primäres elektromagnetisches Feld im Bereich des Einführungsschlitzes 16. Dieses primäre elektromagnetische Feld würde mit metallischen Komponenten, die in einer fremden Lesevorrichtung notwendigerweise enthalten sind, wechselwirken und Wirbelströme in diesen erzeugen. Durch die Wechselwirkung des primären elektromagnetischen Feldes mit den metallischen Komponenten der fremden Lesevorrichtung wird ein sekundäres elektromagnetisches Feld erzeugt, welches über die zweite Induktivität 34 vom Metalldetektor 30 detektiert wird. Auf diese Weise kann mit dem Metalldetektor 30 festgestellt werden, ob eine fremde Lesevorrichtung installiert wurde, beispielsweise wenn für eine vorbestimmte Zeitdauer ein fremdes metallisches Objekt vom Metalldetektor 30 detektiert wurde.

Aufgrund der Metalldetektion und der Erzeugung des Schutzfeldes ist die Magnetkarte eines Kunden in doppelter Weise vor einem Ausspähangriff geschützt.

Wenn eine Bankkarte in den Einführungsschlitz 16 eingeführt wird, wird diese mit Hilfe eines Sensors erfasst, und die Bankkarte wird von der Transportvorrichtung 18 in das Kartenlesegerät 12 transportiert und an dem Lesekopf 22 der Lesevorrichtung des Kartenlesegerätes 12 vorbeigefahren, so dass der Magnetstreifen der Bankkarte ausgelesen werden kann. Bevor die Bankkarte überhaupt von der Transportvorrichtung 18 in das Kartenlesegerät 12 eingefahren wird, kann jedoch mit dem Lesekopf 20, der auch als Magnetspurvorerkennungskopf bezeichnet wird, festgestellt werden, ob der Magnetstreifen an der richtigen Stelle liegt, d.h. ob die Magnetkarte mit der richtigen Orientierung in den Einführungsschlitz 16 eingeführt wurde.

Da das Lesen des Magnetstreifens und die Bewegung der Bankkarte durch die Transportvorrichtung 18 eng miteinander verknüpft und miteinander synchronisiert sind, werden die Transportvorrichtung 18 und die Leseköpfe 20 und 22 von derselben Steuereinheit 24 gesteuert. Die Tatsache, dass im Zuge der Transport- und Lesesteuerung durch die Steuereinheit 24 der Beginn und das Ende des Lesens des Magnetstreifens durch die Leseköpfe 20 und 22 explizit festgestellt bzw. berücksichtigt werden, wurde bei der vorliegenden Erfindung ausgenutzt, um die zeitliche Steuerung des Schutzfeldes mit dem Leseprozeß des Kartenlesegerätes 10 zu synchronisieren. Dazu wird der Schutzfeldgenerator 26 von derselben Steuereinheit 24 angesteuert, die auch die Transportvorrichtung 18 und die Leseköpfe 20 und 22 der Lesevorrichtung steuert, und zwar derart, dass das Schutzfeld während des Lesens der Bankkarte im Kartenlesegerät 10 abgeschaltet wird und nach Beendigung des Lesens wiederhergestellt wird. Anstatt das Schutzfeld komplett abzuschalten, könnte es auch in seiner Intensität verringert werden oder in irgendeiner anderen Weise geändert werden, solange sichergestellt ist, dass das geänderte Schutzfeld das Lesen der Karte im Kartenlesegerät 10 nicht beeinträchtigt.

Es ist auch nicht unbedingt notwendig, dass das Schutzfeld unmittelbar mit dem Beginn des Lesens abgeschaltet und unmittelbar nach Beendigung des Lesens wiederhergestellt wird. Jedoch sollte das Schutzfeld zumindest immer dann aufgebaut sein, wenn sich die Bankkarte vollständig oder nahezu vollständig außerhalb des Kartenlesegerätes 10 befindet.

Dadurch, dass das Schutzfeld während des Lesens der Bankkarte im Kartenlesegerät 10 abgeschaltet oder verringert wird, kann eine Beeinträchtigung des Lesens im Kartenlesegerät 10 durch das Schutzfeld auf einfache und zuverlässige Weise ausgeschlossen werden.

## Patentansprüche

1. Verfahren zum Betrieb einer Schutzeinrichtung für ein ein Kartenlesegerät (10) enthaltendes SB-Terminal, wie einen Geldautomaten , ein Kontoauszugsdrucker und/oder ein Informationsterminal, zum Verhindern des Auslesens von Daten von einer Magnetstreifenkarte mittels einer Ausspäheinrichtung, die in betrügerischer Absicht von Dritten in der Nähe des Kartenlesegerätes (10) installiert worden ist,
wobei die Schutzvorrichtung einen Schutzfeldgenerator (26) und eine Induktivität (28) zum Erzeugen eines elektromagnetischen Schutzfeldes aufweist, welches geeignet ist, die Funktion der Ausspähvorrichtung zu beeinträchtigen,
und wobei das Kartenlesegerät (10) mindestens einen Lesekopf (20, 22) für Magnetspuren umfasst,
**dadurch gekennzeichnet, dass** die Schutzvorrichtung (26, 28) von einer Steuereinheit (24) des Kartenlesegerätes (10) zur Steuerung einer Karten-Transportvorrichtung (18) und/oder einer Lesevorrichtung (20, 22) des Kartenlesegerätes derart gesteuert wird, dass das Schutzfeld zumindest während der Zeitspanne des Lesens der Karte im Kartenlesegerät (10) so geändert wird, dass das Lesen der Karte im Kartenlesegerät (10) nicht durch das Schutzfeld beeinträchtigt wird,
wobei die Steuereinheit (24) die Schutzvorrichtung (26) so steuert, dass das Schutzfeld erst dann geändert wird, wenn sich ein Teil der Magnetspur der Karte in dem Kartenlesegerät (10) befindet,
und wobei die Steuereinheit (24) die Schutzvorrichtung (26) so steuert, dass sie das Schutzfeld nach dem Lesevorgang durch das Kartenlesegerät (10) wieder so herstellt dass die Funktion einer angebrachten Ausspäheinrichtung beinträchtigt wird und zwar bevor die Magnetspur der Karte das Kartenlesegerät (10) vollständig verlassen hat.

2. Verfahren nach Anspruch 1, bei der das Schutzfeld während des Lesevorgangs abgeschaltet wird.

3. Vorrichtung eingerichtet zur Durchführung des Verfahrens nach einem der Ansprüche 1 oder 2, bei der die Schutzvorrichtung (26, 28) in das Kartenlesegerät (10) integriert ist.

4. Vorrichtung nach Anspruch 3, bei der die Schutzvorrichtung eine Induktivität (28) zum Erzeugen des Schutzfeldes umfasst und diese in einem Mundstück oder einer Abdeckung (14) des Kartenlesegerätes (10) integriert ist.

5. Vorrichtung nach Anspruch 4, bei der das Mundstück oder die Abdeckung (14) aus Kunststoff besteht.

6. Vorrichtung nach Anspruch 5, bei der die Induktivität (28) in das Mundstück oder die Abdeckung (14) eingegossen ist.

7. Vorrichtung nach einem der vorhergehenden Ansprüche 3 bis 6, bei der das Schutzfeld ein elektromagnetisches Wechselfeld mit einer Frequenz von 20 bis 50 kHz, vorzugsweise von 40 bis 50 kHz ist.

8. Vorrichtung nach einem der vorhergehenden Ansprüche 3 bis 7, die ferner eine Sensorik umfasst, die geeignet ist, das Vorhandensein einer Ausspähvorrichtung festzustellen.

9. Vorrichtung nach Anspruch 8, **dadurch gekennzeichnet, dass** die Sensorik eine Vorrichtung (30, 32, 34) zur Metalldetektion umfasst, die geeignet ist, das Vorhandensein einer Ausspähvorrichtung anhand ihrer metallischen Komponenten festzustellen.

10. Vorrichtung nach Anspruch 9, bei der die Vorrichtung zur Metalldetektion mindestens eine erste Induktivität (32) zum Erzeugen eines primären elektromagnetischen Feldes und mindestens eine zweite Induktivität (34) umfasst, die geeignet ist, ein sekundäres elektromagnetisches Feld zu detektieren, welches durch die Wechselwirkung des primären elektromagnetischen Feldes mit metallischen Komponenten der Ausspähvorrichtung beeinflußt wird.

## Claims

1. Method for operating a protection device for a self-service terminal which contains a card reading device (10), such as a cash machine, a statement printer and/or information terminal, for presenting data being read out from a magnetic strip card by means of a spying-out device which has been installed in the vicinity of the card reading device (10) by third parties with fraudulent intent,
with the protection apparatus having a protective field generator (26) and an inductor (28) for generating a protective electromagnetic field which is suitable for impairing the functioning of the spying-out apparatus,
and with the card reading device (10) comprising at least one reading head (20, 22) for magnetic tracks, **characterized in that** the protection apparatus (26, 28) is controlled by a control unit (24) of the card reading device (10) for controlling a card transportation apparatus (18) and/or a reading apparatus (20, 22) of the card reading device in such a way that the protective field is changed at least during the time period over which the card is read in the card reading device (10) such that reading of the card in the card reading device (10) is not impaired by the protective field, the control unit (24) controlling the protection apparatus (26) such that the protective field is changed only when part of the magnetic track of the card is located in the card reading device (10) and the control unit (24) controlling the protection apparatus (26) such that said protection apparatus reestablishes the protective field after the reading process by the card reading device (10) in such a way that the functioning of an attached spying-out apparatus is impaired, specifically before the magnetic track of the card has completely left the card reading device (10).

2. Method according to Claim 1, in which the protective field is switched off during the reading process.

3. Apparatus arranged for the implementation of the method according to one of Claims 1 or 2, in which the protection apparatus (26, 28) is integrated in the card reading device (10).

4. Apparatus according to Claim 3, in which the protection apparatus comprises an inductor (28) for generating the protective field and said inductor is integrated in a mouthpiece or a cover (14) of the card reading device (10).

5. Apparatus according to Claim 4, in which the mouthpiece or the cover (14) is composed of plastic.

6. Apparatus according to Claim 5, in which the inductor (28) is encapsulated in the mouthpiece or the cover (14).

7. Apparatus according to one of the preceding Claims 3 to 6, in which the protective field is an alternating electromagnetic field with a frequency of from 20 to 50 kHz, preferably of from 40 to 50 kHz.

8. Apparatus according to one of the preceding Claims 3 to 7, which further comprises a sensor system which is suitable for determining the presence of a spying-out apparatus.

9. Apparatus according to Claim 8, **characterized in that** the sensor system comprises an apparatus (30, 32, 34) for metal detection, which apparatus is suitable for determining the presence of a spying-out apparatus on the basis of its metal components.

10. Apparatus according to Claim 9, in which the apparatus for metal detection comprises at least one first inductor (32) for generating a primary electromagnetic field and at least one second inductor (34) which is suitable for detecting a secondary electromagnetic field which is influenced by the interaction of the primary electromagnetic field with metal components of the spying-out apparatus.

## Revendications

1. Procédé pour faire fonctionner un dispositif de protection d'un terminal de libre-service, comme un guichet automatique de banque, une imprimante d'extrait de compte et/ou un terminal d'information, pour empêcher la lecture de données d'une carte à bande magnétique au moyen d'un dispositif de piratage, qui a été installé à des fins de tromperie par des tiers à proximité de l'appareil (10) de lecture de carte,
le dispositif de protection ayant un générateur (26) de champ de protection et une inductance (28) de production d'un champ de protection électromagnétique, qui est propre à porter atteinte au fonctionnement du dispositif de piratage,
et dans lequel l'appareil (10) de lecture de carte comprend au moins une tête (20, 22) de lecture de piste magnétique,
**caractérisé en ce que** le dispositif (26, 28) de protection est commandé par une unité (24) de commande de l'appareil (10) de lecture de carte pour la commande d'un dispositif (18) de transport de carte et/ou d'un dispositif (20, 22) de lecture de l' appareil de lecture de carte, de façon à ce que le champ de protection soit modifié, au moins pendant le laps de temps de la lecture de la carte dans l'appareil (10) de lecture de carte, et de façon à ce qu'il ne soit pas porté atteinte par le champ de protection à la lecture de la carte dans l'appareil (10) de lecture de carte,
l'unité (24) de commande commandant le dispositif (26) de protection, de manière à ce que le champ de protection ne soit modifié que lorsqu'une partie de la piste magnétique de la carte se trouve dans l'appareil (10) de lecture de carte,
et dans lequel l'unité (24) de commande commande le dispositif (26) de protection, de manière à ce que le champ de protection fasse en sorte à nouveau, après l'opération de lecture par l'appareil (10) de lecture de carte, qu'il soit porté atteinte au fonctionnement d'un dispositif de piratage appliqué et cela avant que la piste magnétique de la carte ait quitté complètement l'appareil (10) de lecture de carte.

2. Procédé suivant la revendication 1, dans lequel le champ de protection est interrompu pendant l'opération de lecture.

3. Dispositif conçu pour la mise en oeuvre du procédé suivant l'une des revendications 1 ou 2, dans lequel le dispositif (26, 28) de protection est intégré dans l'appareil (10) de lecture de carte.

4. Dispositif suivant la revendication 3, dans lequel le dispositif de protection comprend une inductance (28) de production du champ de protection et celle-ci est intégrée dans un embout ou dans un capot (14) de l'appareil (10) de lecture de carte.

5. Dispositif suivant la revendication 4, dans lequel l'embout ou le capot (14) est en matière plastique.

6. Dispositif suivant la revendication 5, dans lequel l'inductance (28) est coulée dans l'embout ou dans le capot (14).

7. Dispositif suivant l'une des revendications précédentes 3 à 6, dans lequel le champ de protection est un champ alternatif électromagnétique ayant une fréquence de 20 à 50 kHz, de préférence de 40 à 50 kHz.

8. Dispositif suivant l'une des revendications précédentes 3 à 7, qui comprend, en outre, un dispositif de détection propre à constater la présence d'un dispositif de piratage.

9. Dispositif suivant la revendication 8, **caractérisé en ce que** le dispositif de détection comprend un dispositif (30, 32, 34) de détection de métal propre à constater la présence d'un dispositif de piratage au moyen de ses éléments métalliques.

10. Dispositif suivant la revendication 9, dans lequel le dispositif de détection de métal comprend au moins une première inductance (32) de production d'un champ électromagnétique primaire et au moins une deuxième inductance (34) propre à détecter un champ électromagnétique secondaire, qui est influencé par l'interaction du champ électromagnétique primaire avec des éléments métalliques du dispositif de piratage.
